# EUROPEAN PATENT SPECIFICATION

(11) **EP 3 056 738 B1**
(45) Date of publication and mention of the grant of the patent: **25.03.2020**
(21) Application number: 16154568.6
(22) Date of filing: 05.02.2016
(51) Int. Cl.: F04D 25/08, H02K 9/06, H02K 5/20, H02K 9/14, F04D 19/00

(54) **ELECTRIC MOTOR COOLED BY AN AXIAL FAN, WHEREIN THE AIR FLOW IS DIRECTED CENTRIPETALLY TOWARDS THE INSIDE OF THE MOTOR BY A BELL-SHAPED HOOD**
VON EINEM AXIALLÜFTER GEKÜHLTER ELEKTROMOTOR, WOBEI DER LUFTSTROM DURCH EINE GLOCKENFÖRMIGE HAUBE ZENTRIPETAL ZUM INNEREN DES MOTORS HIN GERICHTET WIRD
MOTEUR ÉLECTRIQUE REFROIDI PAR UN VENTILATEUR AXIAL, DANS LEQUEL LE COURANT D'AIR EST DIRIGÉ DE FAÇON CENTRIPÈTE VERS L'INTÉRIEUR DU MOTEUR PAR UN CAPOT EN FORME DE CLOCHE

(30) Priority: 13.02.2015 TW 104105158
(43) Date of publication of application: 17.08.2016
(73) Proprietor: Chou, Wen-San, Tainan City (TW)
(72) Inventor: Chou, Wen-San, Tainan City (TW)
(74) Representative: Lang, Christian

(56) References cited:
- WO-A1-2005/031948
- DE-B- 1 101 599

## Description

### (a) Technical Field of the Invention

The present invention relates to a motor and, more particularly, to a motor with a heat dissipation structure capable of restraining temperature therein, wherein the motor is provided with a hollow hood at its housing for collecting the air current generated by a cooling fan provided at a rotating shaft of the motor, wherein one portion of the hollow hood is located above at least one upstream through hole of the motor's housing, so that the air current can quickly enter the housing via the upstream through hole to dissipate heat therein, and thus the performance and service life of the motor can be increased.

### (b) Description of the Prior Art

Today, motors are widely used in industry for providing mechanical power. When a motor, irrespective of lower or high power, is running, the rotor assembly (including an armature core formed by an iron core wound with enameled wire, a commutator, a brush unit, etc.) and the magnets in the motor's housing will generate heat and thus cause a temperature rise. In particular, the heat accumulated in the motor's housing may cause the brush unit to contain more carbon deposits, thus affecting the electrical circuit of the motor. Besides, high temperature resulting from the armature core may reduce the magnetic intensity of the magnets used in the motor. Thus, the performance of the motor will be gradually reduced.

Currently, emergency repair kits, which are commonly used in daily life, employ a low-power motor to drive a compressor unit therein for repairing punctured tires. However, in some countries, the Traffic Act stipulates that, when a tire being punctured happens to a vehicle on a highway, the driver should repair the punctured tire within a specified period and should immediately drive away after the repair is completed to prevent rearward bump. Under these circumstances, for completing the repair as soon as possible, the motor of the compressor unit of an emergency repair kit should be operated at a higher speed. However, if the heat accumulated in the motor's housing cannot be quickly taken away, the performance of the motor will decrease. Even worse, the enameled wire of the armature core will probably be damaged to cause a short circuit, and thus the motor may burn out.

For solving this problem, a motor is usually installed with a cooling fan at its output shaft. However, the airflow induced by the cooling fan can only flow along the outer surface of the motor's housing. Thus, the heat generated by the armature core, especially the enameled wire, in the motor is not easy to be taken away. The problem of a motor being subject to heat accumulation has not yet been overcome.

From DE 1 101 599 A a car alternator is known having a cylindrical housing with inlet holes on its circumferential surface and outlet holes on its axial surface. A hood is positioned on the housing above the inlet holes, thereby preventing water and dust from entering the housing through the inlet holes. A cooling fan is mounted within the housing on the shaft of the alternator in order to induce an air flow that enters the housing through the inlet holes and cools the interior parts when the shaft is driven. The hood is made of an elastic material in order for it to be fixed on the housing by the restoring force of the stretched material and thus without separate fixing means.

Furthermore, WO 2005/031948 A1 discloses a motor according to the preamble of claim 1.

### SUMMARY OF THE INVENTION

According to the invention a motor with the features of claim 1 is provided. Further embodiments are the subject-matter of the dependent claims.

One object of the present invention is to provide a motor with a heat dissipation structure, wherein the housing of the motor is provided with a hollow hood for collecting the air current generated by a cooling fan provided at a rotating shaft of the motor. The housing defines at least one upstream through hole and at least one downstream through hole. The hollow hood is mounted to the housing such that a head portion thereof is located above the upstream through hole. The air current can be effectively collected by the hollow hood to enter the housing via the upstream through hole and finally to go out of the housing via the downstream through hole, so that the heat generated by the rotor assembly in the housing can be quickly taken away. Thus, heat is not easy to accumulate in the housing, maximum power output of the motor can be achieved, and the performance and service life of the motor can be increased.

Other objects, advantages, and novel features of the present invention will become more apparent from the following detailed description when taken in conjunction with the accompanying drawings.

### BRIEF DESCRIPTION OF THE DRAWINGS

FIG. 1 shows a 3-dimensional view of a motor according to one embodiment of the present invention.
FIG. 2 shows a 3-dimensional view of the motor, which is viewed from a different angle than FIG. 1.
FIG. 3 shows a partially exploded view of the motor.
FIG. 4 shows a plan view of the motor.
FIG. 5 shows a sectional view of the motor taken along line A-A in FIG. 4, wherein the air current generated by a cooling fan is demonstrated.
FIG. 6 shows a sectional view of the motor taken along line B-B in FIG. 4, wherein the air current generated by the cooling fan is demonstrated.
FIG. 7 shows a sectional view of the motor taken along line C-C in FIG. 4, wherein the air current generated by the cooling fan is demonstrated.

### DETAILED DESCRIPTION OF THE PREFERRED EMBODIMENTS

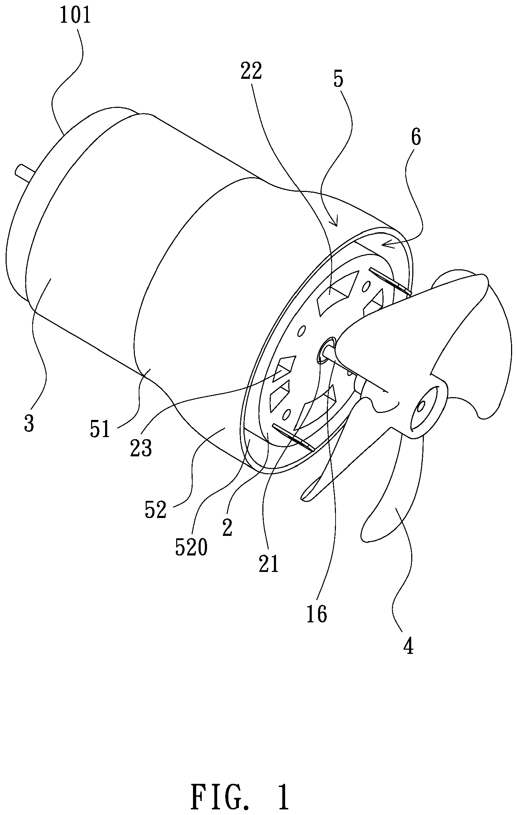

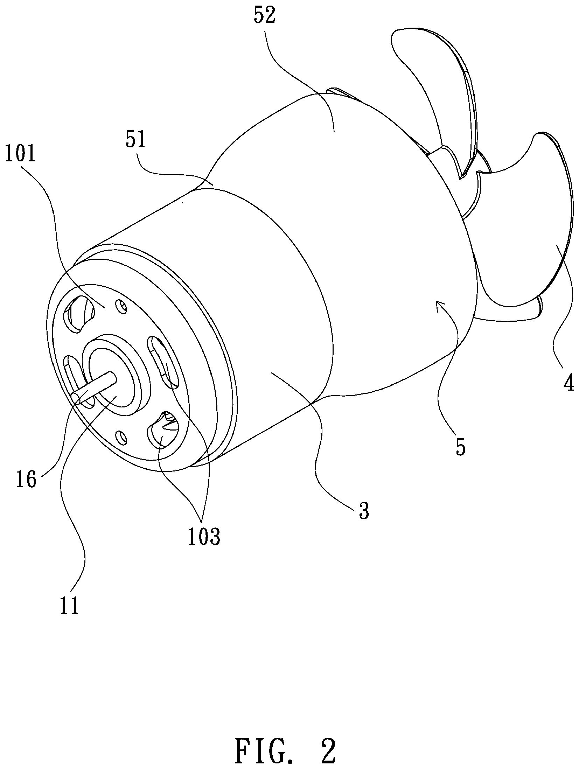

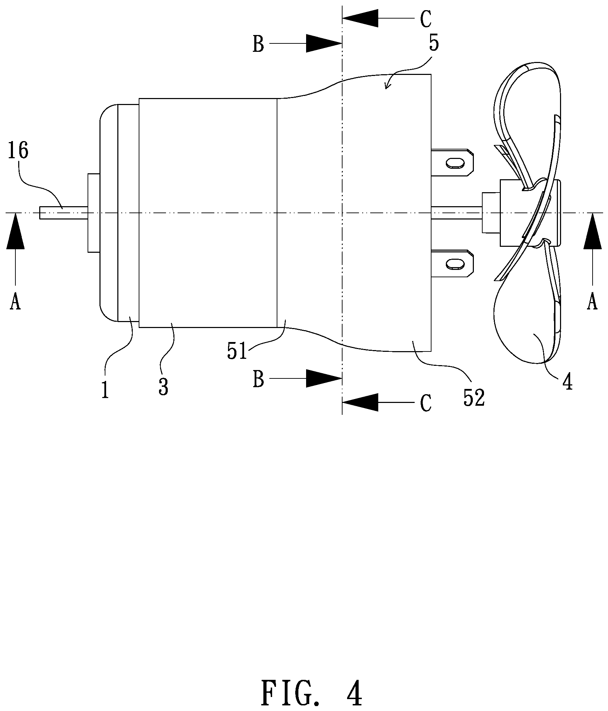

Since motors are commonly used devices, the principles of a motor's operation are not illustrated in the following paragraphs. However, basic elements of a motor will be described in this specification. Referring to FIGS. 1 through 7, a motor according to one embodiment of the present invention is shown, which includes a cylindrical housing 1, in which a rotor assembly and two opposite magnets 12 are provided. The rotor assembly includes a rotating shaft 16, an armature core formed by an iron core 171 wound with enameled wire 172, and a commutator 173. The two opposite magnets 12 are provided at an inner surface of the cylindrical housing 1. The housing 1 has a circumferential wall which terminates at a flat closure wall 101 (a front end of the motor). The flat closure wall 101 is provided with a first bearing 11 at its center and defines a plurality of downstream through holes 103 around the first bearing 11. A first end of the rotating shaft 16 is mounted to the first bearing 11 (see FIG. 2). The circumferential wall of the housing 1 defines a plurality of upstream through holes 10 for allowing outside air to enter the housing 1. A sleeve 3, which is made of a magnetically permeable metal, is closely fitted around the cylindrical housing 1, so as to increase the performance of the motor.

A cover 2 is provided with a second bearing 21 at its center and mounted to a rear end of the housing 1 opposite to the flat closure wall 101. A second end of the rotating shaft 16 of the rotor assembly is mounted at the second bearing 21 (see FIG. 1). A cooling fan 4 is installed to the second end of the rotating shaft 16 of the rotor assembly, near the cover 2. The cover 2 defines a plurality of air inlets 22, 23, which allow outside air to enter the housing 1 to dissipate heat therein.

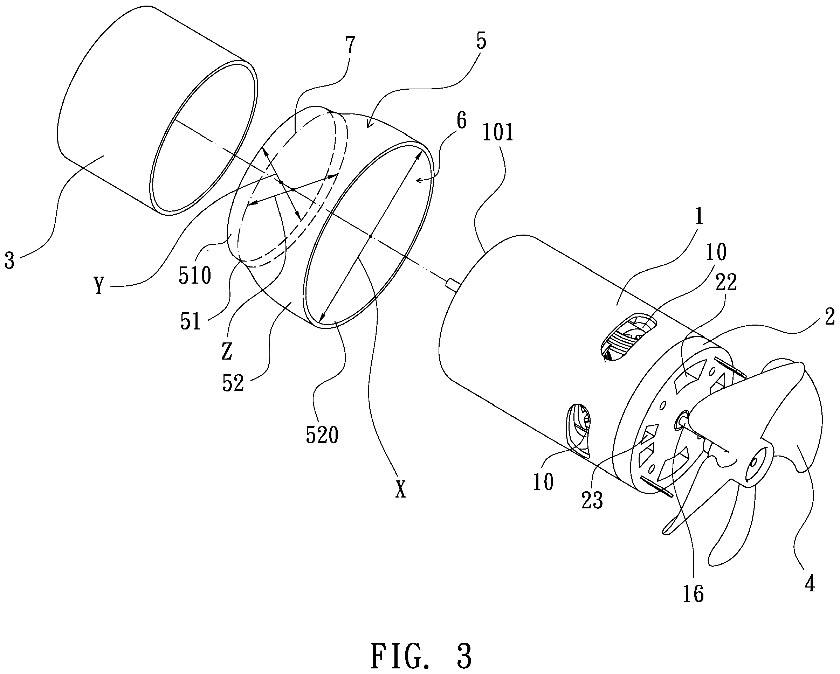

A primary feature of the present invention is that a hollow hood 5 is provided at a front portion of the cylindrical housing 1 near the cooling fan 4 for collecting the air current generated by the cooling fan 4. The hollow hood 5 has a neck portion 51, a head portion 52, and a gradually enlarged transitional portion between the neck portion 51 and the head portion 52, wherein the neck portion 51 opens out at a first opening 510 while the head portion 52 opens out at a second opening 520 which is opposite to the first opening 510. The hollow hood 5 is mounted to the cylindrical housing 1 such that the neck portion 51 is closely fitted around the cylindrical housing 1 while the head portion 52 is located above the through holes 10, thus defining an annular air-guiding channel 6 therebetween which communicates with the through holes 10, and forming an intercepting surface 7 at an inner surface of the gradually enlarged transitional portion of the hollowing hood 5. The hollow hood 5 is a bell-shaped body, so that the annular air-guiding channel 6 has a cross-sectional dimension which increases gradually as extending from the intercepting surface 7 to the second opening 520 of the hollow hood 5. In this embodiment, as shown in FIG. 3, the first opening 510 of the hollow hood 5 is a circular opening, which has a diameter of (Y); the second opening 520 of the hollow hood 5 is a circular opening, which has a diameter of (X); the gradually enlarged transitional portion of the hollow hood 5 generally has an internal diameter of (Z) at its intercepting surface 7; wherein the relationship of X > Y and X > Z and Y = Z is fulfilled. The hollow hood 5 can be mounted to the cylindrical housing 1 via the first opening 510, wherein the neck portion 51 of the hollow hood 5 is closed fitted around the front portion of the cylindrical housing 1; the head portion 52 is located above the cylindrical housing 1 and the upstream through holes 10 and thus is not in contact with the cylindrical housing 1. The annular air-guiding channel 6 is defined between the head portion 52 of the hollow hood 5 and the cylindrical housing 1, and the through holes 10 are located between the intercepting surface 7 and the second opening 520 of the hollow hood 5, so that the air current can pass through the annular air-guiding channel 6 and the through holes 10 to enter the cylindrical housing 1 to take away the heat generated therein. The intercepting surface 7 of the hollow hood 5 can intercept the air current entering the annular air-guiding channel 6 to facilitate it to pass through the through holes 10 to enter the housing 1.

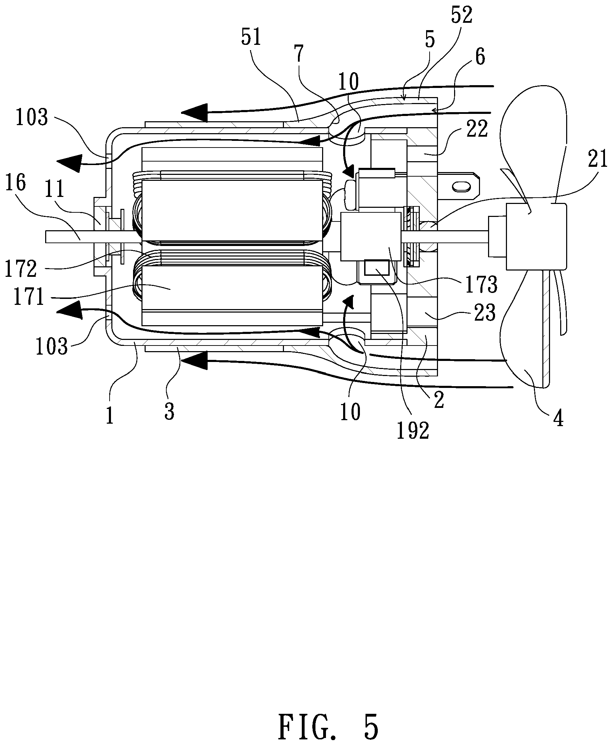

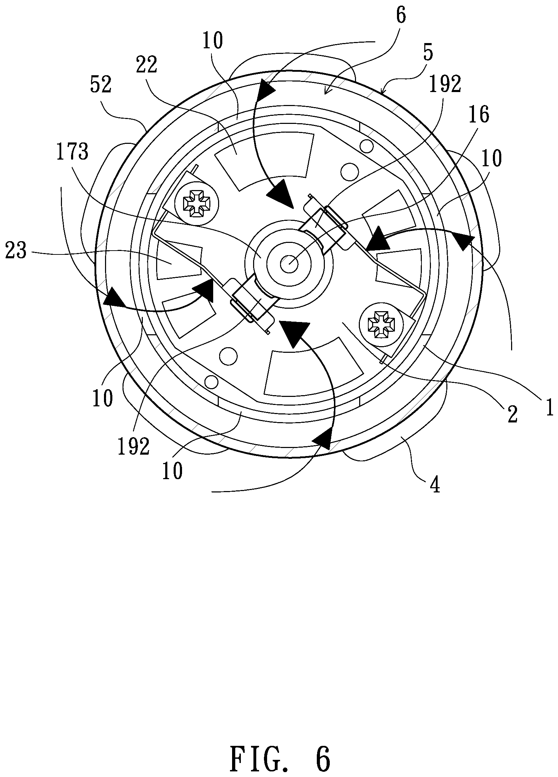

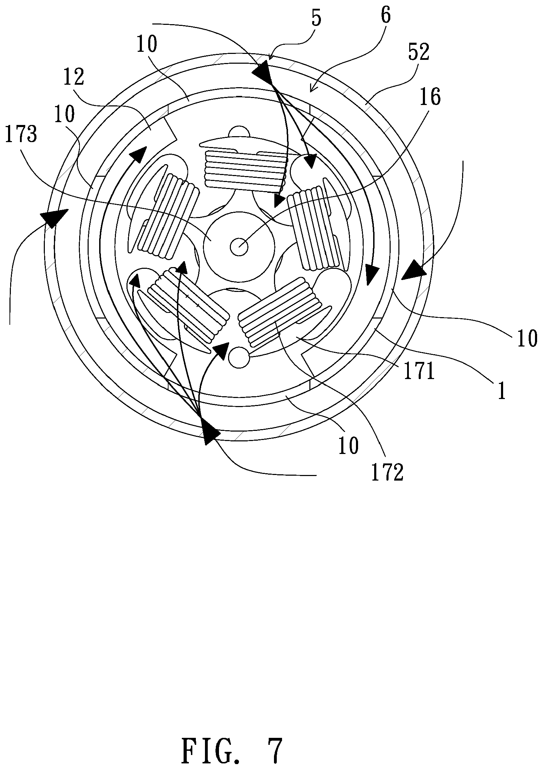

In operation, as shown in FIG. 5, in addition to some of the air current generated by the cooling fan 4 being able to enter the housing 1 via the air inlets 22, 23 defined at the cover 2, most of the air current generated by the cooling fan 4 can be collected by the hollow hood 5, wherein the intercepting surface 7 can intercept or block the air current entering the annular air-guiding channel 6, so that the air current can pass through the upstream through holes 10 to enter the cylindrical housing 1 more easily. After the air current enters the cylindrical housing 1, the heat generated by the brush unit 192, the commutator 173 (see FIG. 6), and the iron core 171 wound with the enameled wire 172 (see FIG. 7) can be taken away and finally the air current can flow out of the housing 1 via the downstream through holes 103, so that heat is not easy to accumulate in the housing 1 and thus the service life of the motor can be increased. In addition, the diameter of the cooling fan 4 is larger than that of the second opening 520 of the hollow hood 5, such that some of the air current generated by the cooling fan 4 may pass over the hollow hood 5 to flow along the outer surface of the circumferential wall of the cylindrical housing 1 and the sleeve 3 to cool down the housing 1 (see FIG. 5).

As a summary, the hollow hood 5 of the motor of the present invention can effectively collect the air current generated by the cooling fan 4, so that the air current can quickly enter the cylindrical housing 1 via the upstream through holes 10 to dissipate the heat generated therein. As such, heat is not easy to accumulate in the housing and thus the performance and service life of the motor can be increased.

Although the present invention has been described with a certain degree of particularity, it is understood that the present disclosure is made by way of example only and the combination and arrangement of parts may be resorted to without departing from the scope of the invention, which is defined by the appended claims.

## Claims

1. Amotor including a cylindrical housing (1), a cooling fan (4) having a diameter, a rotating shaft (16), and a cover (2), the cylindrical housing (1) defining at least one upstream through hole (10) at its circumferential wall, wherein the cooling fan (4) is mounted at an end of the rotating shaft (16) outside the housing (1) and near the cover (2) for generating an air current towards the cylindrical housing (1) for dissipating the heat generated in the motor; wherein the cover (2) defines a plurality of air inlets (22, 23) and is mounted to a rear end of the housing (1)
and wherein a hollow hood (5) is provided for collecting the air current generated by the cooling fan (4), the hollow hood (5) having a neck portion (51), a head portion (52), and a gradually enlarged transitional portion integrally formed between the neck portion (51) and the head portion (52), the neck portion (51) opening out at a first opening (510), the head portion (52) opening out at a second opening (520) which is opposite to the first opening (510) and which has a diameter, the hollow hood (5) being mounted to the cylindrical housing (1) near the cooling fan (4) such that the neck portion (51) is closely fitted around the cylindrical housing (1) and the head portion (52) of the hollow hood (5) is located above the upstream through hole (10), thus defining an annular air-guiding channel (6) therebetween which communicates with the upstream through hole (10) and forming an intercepting surface (7) at an inner surface of the gradually enlarged transitional portion of the hollow hood (5), the upstream through hole (10) being located between the intercepting surface (7) and the second opening (520) of the hollow hood (5), whereby the air current can quickly pass through the annular air-guiding channel (6) and the upstream through hole (10) to enter the cylindrical housing (1) to take away the heat generated therein,
**characterized in that**
the diameter of the cooling fan (4) is larger than that of the second opening (520) of the hollow hood (5).

2. The motor according to claim 1, wherein the first opening (510) of the hollow hood (5) is a circular opening, the second opening (520) of the hollow hood (5) is a circular opening and the hollow hood (5) is a bell-shaped body, so that the annular air-guiding channel (6) has a cross-sectional dimension which increases gradually as extending from the intercepting surface (7) to the second opening (520) of the hollow hood (5).

3. The motor according to claim 2, wherein the first opening (510) of the hollow hood (5) has a diameter of Y, the second opening (520) of the hollow hood (5) has a diameter of X and the gradually enlarged transitional portion of the hollow hood (5) generally has an internal diameter of Z at its intercepting surface (7), wherein the relationship of X > Y and X > Z and Y = Z is fulfilled.

## Patentansprüche

1. Motor, der ein zylindrisches Gehäuse (1), einen Kühllüfter (4), der einen Durchmesser umfasst, eine rotierende Welle (16) und eine Abdeckung (2) umfasst, wobei das zylindrische Gehäuse (1) mindestens ein stromaufwärtiges Durchgangsloch (10) an seiner Umfangswand definiert, wobei der Kühllüfter (4) an einem Ende der Drehwelle (16), außerhalb des Gehäuses (1) und nahe der Abdeckung (2), angeordnet ist, um einen Luftstrom in Richtung des zylindrischen Gehäuses (1) zu erzeugen, um die im Motor erzeugte Wärme abzuleiten, wobei die Abdeckung (2) eine Mehrzahl an Lufteinlässen (22, 23) definiert und an einem hinteren Ende des Gehäuses (1) montiert ist
und wobei eine hohle Haube (5) zum Sammeln des Luftstroms, der von dem Kühllüfter (4) erzeugt wird, bereitgestellt ist, wobei die hohle Haube (5) einen Halsabschnitt (51), einen Kopfabschnitt (52) und einen graduell vergrößerten Übergangsabschnitt umfasst, der integral zwischen dem Halsabschnitt (51) und dem Kopfabschnitt (52) ausgebildet ist, wobei der Halsabschnitt (51) in eine erste Öffnung (510) mündet und der Kopfabschnitt (52) in eine zweite Öffnung (520) mündet, die der ersten Öffnung (510) gegenüberliegt und die einen Durchmesser aufweist, wobei die hohle Haube (5) in der Nähe des Kühllüfters (4) an dem zylindrischen Gehäuse (1) angeordnet ist, so dass der Halsabschnitt (51) eng um das zylindrische Gehäuse (1) herum sitzt und der Kopfabschnitt (52) der hohlen Haube (5) oberhalb des stromaufwärtigen Durchgangslochs (10) angeordnet ist, wodurch dazwischen ein ringförmiger Luftführungskanal (6) definiert wird, der mit dem stromaufwärtigen Durchgangsloch (10) in Verbindung steht und eine Auffangfläche (7) an einer Innenfläche des graduell vergrößerten Übergangsabschnitts der hohlen Haube (5) ausbildet, wobei sich das stromaufwärtige Durchgangsloch (10) zwischen der Auffangfläche (7) und der zweiten Öffnung (520) der hohlen Haube (5) befindet, wodurch der Luftstrom schnell durch den ringförmigen Luftführungskanal (6) und das stromaufwärtige Durchgangsloch (10) fließen kann, um in das zylindrische Gehäuse (1) einzutreten, um die darin erzeugte Wärme abzuführen,
**dadurch gekennzeichnet, dass**
der Durchmesser des Kühllüfters (4) größer ist als der der zweiten Öffnung (520) der hohlen Haube (5).

2. Motor gemäß Anspruch 1, bei dem die erste Öffnung (510) der hohlen Haube (5) eine kreisförmige Öffnung ist, wobei die zweite Öffnung (520) der hohlen Haube (5) eine kreisförmige Öffnung ist und die hohle Haube (5) ein glockenförmiger Körper ist, so dass der ringförmige Luftführungskanal (6) eine Querschnittsabmessung aufweist, die sich graduell vergrößert, wenn sie sich von der Auffangfläche (7) zur zweiten Öffnung (520) der hohlen Haube (5) erstreckt.

3. Motor gemäß Anspruch 2, bei dem die erste Öffnung (510) der hohlen Haube (5) einen Durchmesser von Y aufweist, die zweite Öffnung (520) der hohlen Haube (5) einen Durchmesser von X aufweist und der graduell vergrößerte Übergangsabschnitt der hohlen Haube (5) im Allgemeinen einen Innendurchmesser von Z an seiner Auffangfläche (7) aufweist, wobei die Beziehung von X > Y und X > Z und Y = Z erfüllt ist.

## Revendications

1. Moteur incluant un logement cylindrique (1), un ventilateur de refroidissement (4) présentant un diamètre, un arbre de rotation (16), et un couvercle (2), le logement cylindrique (1) définissant au moins un trou débouchant amont (10) au niveau de sa paroi circonférentielle, dans lequel le ventilateur de refroidissement (4) est monté à une extrémité de l'arbre de rotation (16) en dehors du logement (1) et près du couvercle (2) pour la génération d'un courant d'air vers le logement cylindrique (1) pour la dissipation de la chaleur générée dans le moteur; dans lequel le couvercle (2) définit une pluralité d'entrées d'air (22, 23) et est monté à une extrémité arrière du logement (1), et dans lequel un capot creux (5) est prévu pour la collecte du courant d'air généré par le ventilateur de refroidissement (4), le capot creux (5) présentant une portion de col (51), une portion de tête (52), et une portion de transition agrandie progressivement formée d'un seul tenant entre la portion de col (51) et la portion de tête (52), la portion de col (51) s'ouvrant au niveau d'une première ouverture (510), la portion de tête (52) s'ouvrant au niveau d'une seconde ouverture (520) qui est opposée à la première ouverture (510) et qui présente un diamètre, le capot creux (5) étant monté sur le logement cylindrique (1) près du ventilateur de refroidissement (4) de sorte que la portion de col (51) soit insérée étroitement autour du logement cylindrique (1) et la portion de tête (52) du capot creux (5) soit située au-dessus du trou débouchant amont (10), définissant ainsi un canal de guidage d'air annulaire (6) entre elles qui communique avec le trou débouchant amont (10) et formant une surface d'interception (7) au niveau d'une surface intérieure de la portion de transition agrandie progressivement du capot creux (5), le trou débouchant amont (10) étant situé entre la surface d'interception (7) et la seconde ouverture (520) du capot creux (5), moyennant quoi le courant d'air peut passer rapidement au travers du canal de guidage d'air annulaire (6) et du trou débouchant amont (10) pour entrer dans le logement cylindrique (1) pour retirer la chaleur générée dedans,
**caractérisé en ce que**
le diamètre du ventilateur de refroidissement (4) est supérieur à celui de la seconde ouverture (520) du capot creux (5).

2. Moteur selon la revendication 1, dans lequel la première ouverture (510) du capot creux (5) est une ouverture circulaire, la seconde ouverture (520) du capot creux (5) est une ouverture circulaire et le capot creux (5) est un corps en forme de cloche de sorte que le canal de guidage d'air annulaire (6) présente une dimension de section transversale qui augmente progressivement lorsqu'il s'étend depuis la surface d'interception (7) à la seconde ouverture (520) du capot creux (5).

3. Moteur selon la revendication 2, dans lequel la première ouverture (510) du capot creux (5) présente un diamètre de Y, la seconde ouverture (520) du capot creux (5) présente un diamètre de X et la portion de transition agrandie progressivement du capot creux (5) présente généralement un diamètre interne de Z au niveau de sa surface d'interception (7), dans lequel le rapport de X > Y et X > Z et Y = Z est satisfait.
